# EUROPÄISCHE PATENTSCHRIFT

(11) **EP 2 252 183 B1**
(45) Veröffentlichungstag und Bekanntmachung des Hinweises auf die Patenterteilung: **09.10.2013**
(21) Anmeldenummer: 09708369.5
(22) Anmeldetag: 04.02.2009
(51) Int. Cl.: A47J 36/08, A47J 36/04

(54) **RINGELEMENT UND ZUGEHÖRIGER DECKEL**
RING ELEMENT AND ASSOCIATED COVER
ÉLÉMENT ANNULAIRE ET COUVERCLE CORRESPONDANT

(30) Priorität: 07.02.2008 DE 102008008311
(43) Veröffentlichungstag der Anmeldung: 24.11.2010
(73) Patentinhaber: WMF WÜRTTEMBERGISCHE METALLWARENFABRIK AG, 73309 Geislingen/Steige (DE)
(72) Erfinder: ILLERT, Bertrand, 52076 Aachen (DE); LAMMEL, Michael, 52076 Aachen (DE)
(74) Vertreter: BRP Renaud & Partner
(86) Internationale Anmeldenummer: PCT/EP2009/051247
(87) Internationale Veröffentlichungsnummer: WO 2009/098222

(56) Entgegenhaltungen:
- EP-A1- 2 063 745
- WO-A1-2008/036020
- DE-U1- 20 317 540
- FR-A- 2 898 798
- US-A1- 2004 250 690
- US-A1- 2006 266 757

## Beschreibung

Die vorliegende Erfindung betrifft ein elastisches Ringelement für einen Deckel zum lösbaren Verschließen eines Behälters, insbesondere zum Verschließen eines Kochtopfes. Die Erfindung betrifft außerdem einen Deckel mit einem derartigen Ringelement sowie einen, mit einem solchen Deckel ausgestatteten Behälter.

Moderne Behälter, wie z.B in US 2004/0250690 offenbart, welche insbesondere für das Aufbewahren von Flüssigkeiten oder zum Kochen ausgebildet sind, besitzen oftmals sogenannte Schnaupen, welche im wesentlichen eine radiale Aufweitung nach außen darstellen und landläufig auch als Ausgießschnauze bezeichnet werden. Derartige Schnaupen erleichtern ein dosiertes Ausgießen aus dem zugehörigen Behälter. Zum Verschließen eines derartigen Behälters dient oftmals ein zugehöriger Deckel, welcher einfach in die - meist nach oben weisende - Behälteröffnung einsetzbar ist. Je nach Ausbildung des Deckels kann dieser im, in den Behälter eingesetzten Zustand, dessen Schnaupe verschließen und/oder zumindest teilweise verdecken. Problematisch sind dabei jedoch oftmals die Verwendung der Schnaupe bei aufgesetztem Deckel und die Reinigung des Deckels.

Die vorliegende Erfindung beschäftigt sich mit dem Problem, einen Deckel zu schaffen, welcher sich einerseits besonders einfach und damit hygienisch einwandfrei reinigen lässt und andererseits ein definiertes Öffnen/Schließen der Schnaupe des Behälters ermöglicht.

Dieses Problem wird erfindungsgemäß durch die Gegenstände der unabhängigen Ansprüche gelöst. Vorteilhafte Ausführungen sind Gegenstand der abhängigen Ansprüche.

Die Erfindung beruht auf dem allgemeinen Gedanken, einen Deckel zum lösbaren Verschließen eines Behälters, mehrteilig auszubilden und zwar aus einem Deckelboden sowie einem, diesen Deckelboden umfangsseitig einfassenden und sich mit einem Axialabschnitt zumindest geringfügig in Axialrichtung erstreckenden, elastischen Ringelement. Dieses elastische Ringelement ist dabei lösbar fest mit dem Deckelboden verbunden und kann zu einer Reinigung leicht von diesem abgenommen werden, wodurch die Reinigung an sich deutlich vereinfacht wird. Bei auf dem Behälter aufgesetztem Deckel, legt sich das Ringelement vorzugsweise dicht an einen oberen Öffnungsrand des Behälters an und schließt diesen somit deutlich besser nach außen ab, als dies beispielsweise mit rein metallischen Deckeln möglich wäre. Zugleich ist denkbar, dass sich bei auf den Behälter aufgesetztem Deckel, der Axialabschnitt des Ringelementes an einer Innenwand des Behälters anlegt und dadurch auch in diesem Bereich eine - zumindest gewisse - Dichtwirkung erzielt. Gemäß der Erfindung, weist das Ringelement zumindest in einem begrenzten Umfangsabschnitt des Axialabschnittes darüber hinaus zumindest eine Durchgangsöffnung auf, die zum Ausgießen von sich in dem Behälter befindlicher Flüssigkeit mit einer Schnaupe des Behälters zur Deckung gebracht werden kann. Je nach gewähltem Querschnitt der Durchgangsöffnung(en) im Axialabschnitt des Ringelementes, ist somit ein definierter Ausgießquerschnitt und damit exakt vorher bestimmbares Ausgießverhalten erzielbar. Vorgesehen ist dabei, dass in mehreren Umfangsabschnitten des Ringelementes unterschiedlich große Durchgangsöffnungen im Axialabschnitt des Ringelementes angebracht sind, so dass durch eine einfache Relativverdrehung zwischen dem Deckel und dem Behälter der jeweils gewünschte Durchgangsöffnungsquerschnitt mit der Schnaupe zur Deckung gebracht werden kann und dadurch auf einfachste Weise unterschiedlich große Ausgießquerschnitte realisierbar sind.

Gemäß einer vorteilhaften Weiterbildung der erfindungsgemäßen Lösung ist das Ringelement aus Polymer, insbesondere aus Silikon ausgebildet. Silikone gehören zur Gruppe synthetischer Polymere, bei denen Siliziumatome über Sauerstoffatome zu Molekülketten und/oder netzartig verknüpft sind. Die restlichen freien Valenzelektronen des Siliziums sind dabei durch Kohlenwasserstoffreste abgesättigt. Silikone bieten den großen Vorteil, dass sie wärmebeständig, hydrophob, dielektrisch sind und in der Regel als physiologisch unbedenklich gelten, weshalb sie auch mit Nahrungsmitteln in Kontakt kommen dürfen, ohne dass hierbei gesundheitsschädliche Auswirkungen zu befürchten sind. Silikone haben darüber hinaus gegenüber kohlenstoffbasierten Kunststoffen den großen Vorteil, dass das menschliche Immunsystem kaum auf sie reagiert. Auch fertigungs- und kostentechnisch gesehen, bieten Silikone große Vorteile, da sie in nahezu jeder Form und kostengünstig herstellbar sind.

Bei der erfindungsgemäßen Lösung weist das Ringelement in Umfangsrichtung versetzt, insbesondere um jeweils 90° versetzt und jeweils an die Größe der Schnaupe angepasste Ausgießabschnitte auf, und zwar einen geschlossenen, einen mit kleinen Durchgangsöffnungen, einen mit größeren Durchgangsöffnungen und einen vollständig offenen, so dass sich vier unterschiedliche Ausgießquerschnitte je nach Relativverdrehung des Deckels bezüglich des Behälters ergeben. Liegt somit der geschlossene Ausgießabschnitt deckungsgleich zur Schnaupe, so kann ein Ausgießen von in dem Behälter bevorrateter Flüssigkeit verhindert werden, während beispielsweise der Ausgießabschnitt mit kleinen oder großen Löchern, für den Fall dass er deckungsgleich zur Schnaupe angeordnet wird, ein mehr oder weniger starkes Ausgießen von in dem Behälter aufbewahrter Flüssigkeit ermöglicht. Die Wahl des Ausgießquerschnittes lässt sich dabei äußerst einfach durch ein Verdrehen des Deckels relativ zum Behälter bestimmen.

Weiterhin ist bei der erfindungsgemäßen Lösung, ist ein, das Ringelement einfassender Haltering, insbesondere ein Haltering aus Metall vorgesehen, welcher sichtbar und die Ausgießabschnitte bzw. -querschnitte im Ringelement abbildende Symbole aufweist, wobei der Haltering vorzugsweise so zum Ringelement positioniert ist, dass die Symbole des Halterings zu den zugehörigen Ausgießabschnitten im Ringelement axial fluchten. Die Symbole haben dabei den großen Vorteil, dass eine den Deckel benutzende Person optisch leicht erkennt, wie sie diesen auf den zugehörigen Behälter aufsetzen muss, um einen gewünschten Ausgießquerschnitt, beispielsweise einen vollständig geschlossenen bzw. einen vollständig offenen, zu erhalten. Die Symbole können dabei eingeätzt, eingraviert oder lediglich aufgedruckt sein. Die beiden ersten Varianten bieten dabei den Vorteil, eine dauerhafte Anbringung der Symbole am Haltering sicher zu gewährleisten. Der Haltering, welcher beispielsweise aus Metall ausgebildet sein kann, kann dabei ebenso wie beispielsweise das Ringelement eine unterschiedliche Farbgestaltung aufweisen, wodurch unterschiedlichste Deckel- bzw. Behälterlinien realisierbar sind. Um spezielle Effekte erzielen zu können, kann beispielsweise der Haltering auch eine gebürstete, das heißt insbesondere eine mattierte Metalloberfläche aufweisen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht auf ein erfindungsgemäßes Ringelement,
- Fig. 2: eine Ansicht von schräg oben auf einen Deckel mit dem erfindungsgemäßen Ringelement,
- Fig. 3: eine Darstellung wie in Fig. 2, jedoch bei einer Ansicht von schräg unten,
- Fig. 4: eine Schnittdarstellung durch den Deckel mit dem Ringelement,
- Fig. 5: ein teilweise geschnittener Behälter mit einem ebenfalls teilweise geschnittenen Deckel.

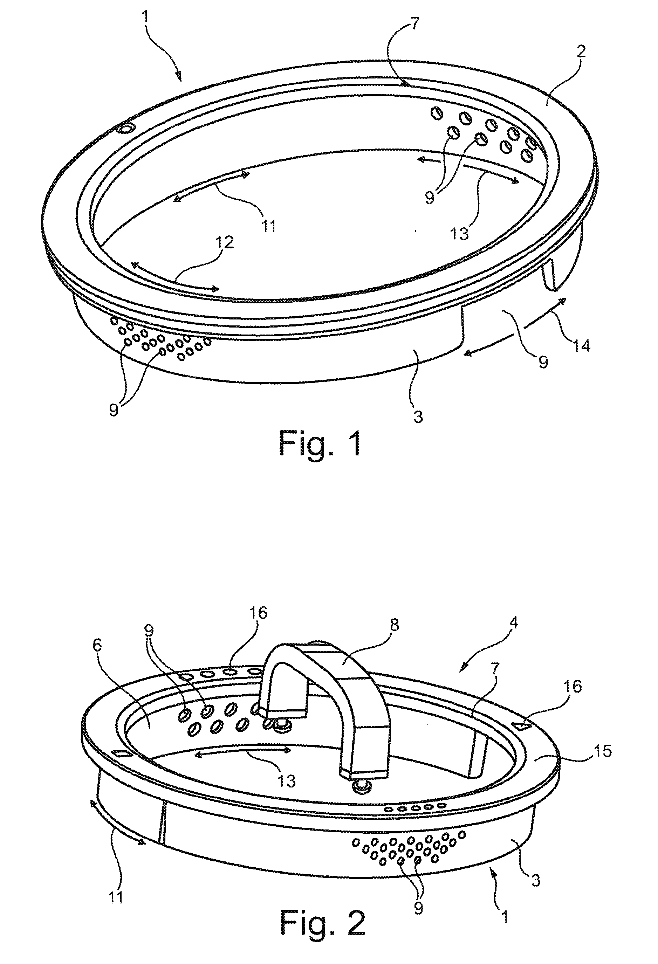

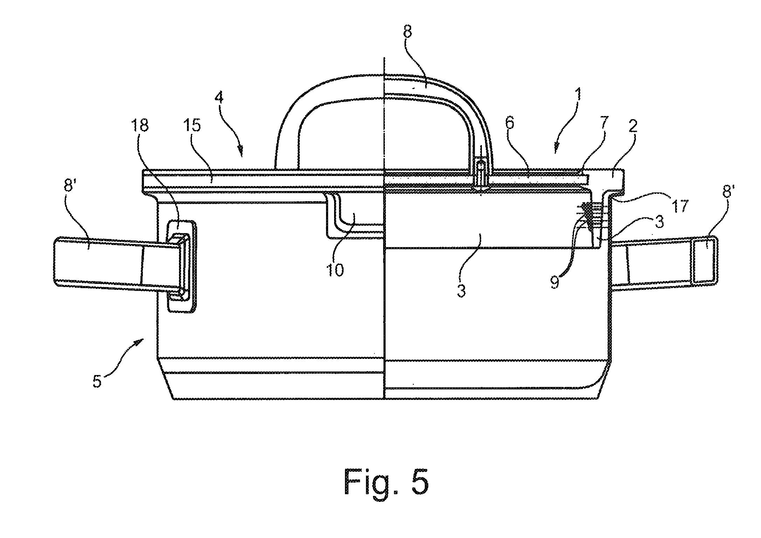

Entsprechend Fig. 1, weist ein elastisches Ringelement 1 eine ringförmige Gestalt mit einem obenliegenden Radialabschnitt 2 sowie einem sich zumindest geringfügig in Axialrichtung des Ringelements 1 erstreckenden Axialabschnitt 3 auf. Das Ringelement 1 ist zur zumindest teilweisen Abdichtung eines Deckels 4 (vgl. die Fig. 2 bis 5) gegenüber einem Behälter 5 (vgl. Fig. 5) ausgebildet. Der Behälter 5 kann dabei insbesondere als Kochtopf ausgebildet sein. Zur Verbindung des elastischen Ringelementes 1 mit einem Deckelboden 6 des Deckels 4, weist das Ringelement 1 eine nach radial innen offene Nut 7 auf, in welche ein Umfangsrand des Deckelbodens 6 eingreift.

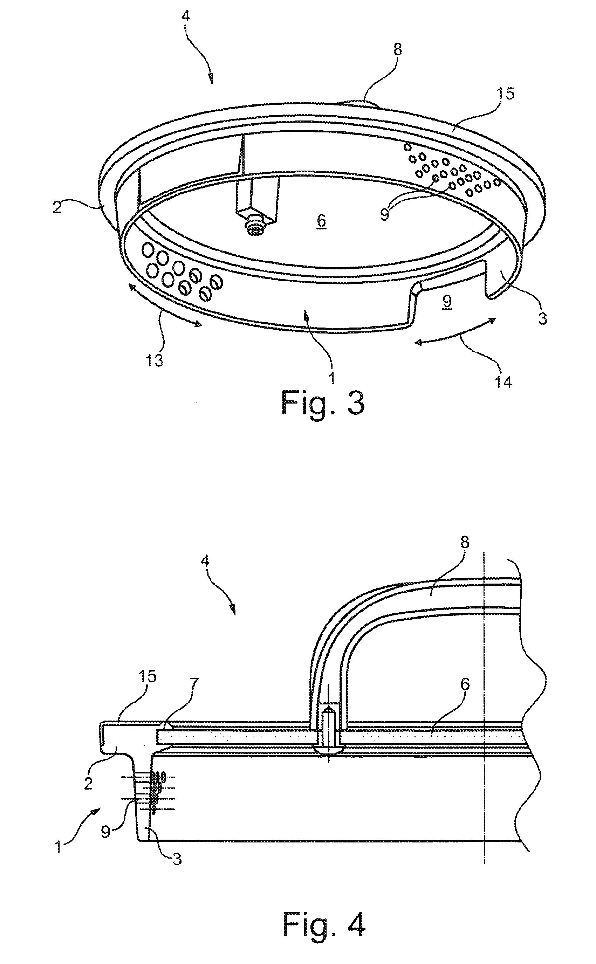

Generell kann das Ringelement 1 aus Kunststoff, insbesondere aus einem silikonartigen Polymer, ausgebildet sein und dadurch sowohl eine hohe Widerstandsfähigkeit aufweisen als auch physiologisch unbedenklich sein. Demgegenüber kann der von dem Ringelement 1 eingefasste Deckelboden 6 des Deckels 4 aus Glas und/oder aus Stahl ausgebildet sein, wobei gemäß den Darstellungen in den Fig. 2 und 3, der Deckelboden 6 aus Glas ausgebildet ist. Zum Anheben des Deckels 4 ist zumindest ein Griffelement 8 vorgesehen, welches mit dem Deckelboden 6 verbunden, insbesondere mit diesem lösbar verschraubt ist.

Erfindungsgemäß weist nun das Ringelement 1 in einem begrenzten Umfangsabschnitt seines Axialabschnittes 3 Durchgangsöffnungen 9 auf, die zum Ausgießen von sich in dem Behälter 5 befindlicher Flüssigkeit mit einer Schnaupe 10 (vgl. Fig. 5) des Behälters 5 zur Deckung gebracht werden können. Die Durchgangsöffnungen 9 können dabei unterschiedliche Durchgangsquerschnitte aufweisen, wie dies beispielsweise in den Fig. 1 bis 3 dargestellt ist, so dass bei einem Überlagern mit der Schnaupe 10 unterschiedliche Ausgießquerschnitte hergestellt werden können. Erfindungsgemäß weist das Ringelement 1 in Umfangsrichtung versetzte, gemäß den Fig. 1 bis 3 um jeweils 90° versetzt und jeweils an die Größe der Schnaupe 10 angepasste Ausgießabschnitte 11-14 auf, und zwar einen geschlossenen Ausgießabschnitt 11, einen Ausgießabschnitt 12, mit kleinen Durchgangsöffnungen 9, einen Ausgießabschnitt 13 mit großen/größeren Durchgangsöffnungen 9 sowie einen vollständig offenen Ausgießabschnitt 14. Durch ein Verdrehen des Deckels 4 relativ zum Behälter 5 können somit die unterschiedlichen Ausgießabschnitte 11 bis 14 mit der Schnaupe 10 des Behälters 5 zur Deckung gebracht werden, so dass je nach Relativlage des Deckels 4 im Behälter 5 unterschiedlich große Ausgießquerschnitte realisierbar sind.

Wie den Fig. 2 bis 5 zu entnehmen ist, ist des weiteren ein, das Ringelement 1 einfassender Haltering 15 vorgesehen, welcher beispielsweise aus Metall ausgebildet sein kann, und welcher mit seinem L-förmigen Querschnittsprofil (vgl. Fig. 4) an einer Außenseite sowie an einer Oberseite des Ringelements 1 anliegt. Der Haltering 15 kann dabei aus unterschiedlichsten Materialien, insbesondere aus poliertem und/oder gebürstetem Metall hergestellt sein und sichtbare und die Ausgießabschnitte im Ringelement 1 abbildende Symbole 16 aufweisen. Die Symbole 16 sind dabei vorzugsweise untrennbar mit dem Haltering 15 verbunden, beispielsweise in diesen eingeätzt. Denkbar ist selbstverständlich auch, dass die Symbole 16 lediglich mittels einer Farbmarkierung auf dem Haltering 15 aufgetragen, beispielsweise aufgedruckt, sind.

Der Haltering 15 ist dabei vorzugsweise derart zum Ringelement 1 positioniert, dass die Symbole 16 auf dem Haltering 15 zu den zugehörigen Ausgießabschnitten 11 bis 14 im Ringelement 1 axial fluchten.
Von besonderem Vorteil bei dem erfindungsgemäßen Deckel 4 ist, dass zumindest der Deckelboden 6, der Haltering 15 und das Ringelement 1 trennbar voneinander ausgebildet sind, wodurch eine besonders einfache und hygienische Reinigung der einzelnen Teile ermöglicht wird.

Betrachtet man die Fig. 5, so ist erkennbar, dass das Ringelement 1 mit seinem Radialabschnitt 2 auf einem leicht nach radial außen gebogenem Öffnungsrand 17 des Behälters 5 aufliegt und diesen in diesem Bereich zumindest teilweise abdichtet. Darüber hinaus kann optional vorgesehen sein, dass das elastische Ringelement 1 mit seinem Axialabschnitt 3 zumindest bereichsweise an einer Innenmantelfläche des Behälters 5 anliegt und in den anliegenden Bereichen zusätzlich eine Abdichtung schafft. Bei dem gemäß der Fig. 5 gezeigten Behälter 5, weist dieser seitliche und vorzugsweise aus einem Kantrohr geformte Griffelemente 8' auf, welche über eine wärmeisolierende Manschette 18 am Behälter 5 befestigt sind. Die wärmeisolierende Manschette 18 bewirkt dabei eine wirkungsvolle Unterbrechung der Wärmeübertragung zwischen dem Behälter 5 und dem Griffelement 8', so dass insbesondere während eines Kochvorganges, bei dem der Behälter 5 üblicherweise stark erhitzt wird, ein gefahrloses Anpacken des Behälters 5 an den Griffelementen 8' möglich ist.

Selbstverständlich ist dabei die gemäß den Fig. 2, 4 und 5 gezeigte Form der Griffelemente 8, 8' rein exemplarisch zu verstehen, so dass auch andere Formen, insbesondere Querschnittsformen, von der Erfindung mit umfasst sein sollen.

Mit dem erfindungsgemäßen Ringelement 1, ist im Vergleich zu einem Deckel 4, welcher vollständig aus Metall ausgebildet ist eine erleichterte Reinigung, welche insbesondere durch die Trennbarkeit des Ringelements 1 vom Deckelboden 6 des Deckels 4 gegeben ist, sowie ein vereinfachtes Dosieren über die im Ringelement 1 vorgesehenen Durchgangsöffnungen 9 möglich. Über eine nahezu frei wählbare Farbe des Ringelementes 1 kann darüber hinaus individuell Einfluss auf das gewünschte Design des Deckels 4 bzw. auch des Behälters 5 genommen werden, was dem Kunden die Möglichkeit bietet, sein gewähltes Behälterset individuell zu gestalten. Ebenso wie die Form der Griffelemente 8, 8' kann selbstverständlich auch der Deckelboden 6 bzw. der Behälter 5 abweichend zum gezeigten Ausführungsbeispiel gestaltet sein, ohne den Rahmen der vorliegenden Erfindung zu verlassen. Gedacht ist hierbei insbesondere an einen gewölbten Deckelboden 6.

## Patentansprüche

1. Elastisches Ringelement (1) für einen Deckel (4) zum lösbaren Verschließen eines Behälters (5), insbesondere zum Verschließen eines Kochtopfes, wobei das Ringelement (1) einen Deckelboden (6) des Deckels (4) umfangsseitig einfasst und sich mit einem Axialabschnitt (3) zumindest geringfügig in Axialrichtung erstreckt, wobei das Ringelement (1) zumindest in einem begrenzten Umfangsabschnitt (12,13,14) seines Axialabschnittes (3) zumindest eine Durchgangsöffnung (9) aufweist, die zum Ausgießen von sich in dem Behälter (5) befindlicher Flüssigkeit mit einer Schnaupe (10) des Behälters (5) zur Deckung gebracht werden kann,
**dadurch gekennzeichnet,**
- **dass** das Ringelement (1) in Umfangsrichtung versetzt, insbesondere um jeweils 90° versetzt, und jeweils an die Größe der Schnaupe (10) angepasste Ausgießabschnitte (11,12,13,14) aufweist, und zwar einen geschlossenen Ausgießabschnitt (11), einen Ausgießabschnitt (12) mit kleinen Durchgangsöffnungen (9), einen Ausgießabschnitt (13) mit großen Durchgangsöffnungen (9) und einen vollständig offenen Ausgießabschnitt (14), so dass sich vier unterschiedliche Ausgießquerschnitte ergeben,
- **dass** ein das Ringelement (1) einfassender Haltering (15), insbesondere aus Metall, vorgesehen ist,
- **dass** der Halterring (15) sichtbare und die Ausgießabschnitte (11,12,13,14) im Ringelement (1) abbildende Symbole (16) aufweist, wobei der Haltering (15) vorzugsweise so zum Ringelement (1) positioniert ist, dass die Symbole (16) des Halterings (15) zu den zugehörigen Ausgießabschnitten (11,12,13,14) im Ringelement (1) axial fluchten,
- **dass** der Haltering (15), das Ringelement (1) und der Deckelboden (6) voneinander trennbar ausgebildet sind.

2. Ringelement nach Anspruch 1,
**dadurch gekennzeichnet,**
**dass** das Ringelement (1) aus Polymer, insbesondere aus Silikon, ausgebildet ist.

3. Deckel (4) zum lösbaren Verschließen eines Behälters (5), insbesondere zum Verschließen eines Kochtopfes, wobei der Behälter (5) eine nach außen gedrückte Schnaupe (10) zum Ausgießen von sich in dem Behälter (5) befindlicher Flüssigkeit aufweist, **dadurch gekennzeichnet, dass** der Deckel (4) mit einem elastischen Ringelement (1) nach Anspruch 1 oder 2 versehen ist.

4. Deckel nach Anspruch 3,
**dadurch gekennzeichnet,**
**dass** der von dem Ringelement (1) eingefasste Deckelboden (6) aus Glas und/oder aus Stahl ausgebildet ist.

5. Deckel nach Anspruch 3 oder 4,
**dadurch gekennzeichnet,**
**dass** am Deckelboden (6) ein Griffelement (8) angeordnet, insbesondere angeschraubt, ist.

6. Deckel nach einem der Ansprüche 3 bis 5,
**dadurch gekennzeichnet,**
**dass** der Halterring (15) ein L-förmiges Querschnittsprofil aufweist und an einer Außenseite sowie einer Oberseite des Ringelementes (1) anliegt.

7. Behälter mit einem Deckel (4) nach einem der Ansprüche 3 bis 6.

8. Behälter nach Anspruch 7,
**dadurch gekennzeichnet,**
**dass** zumindest ein seitliches, vorzugsweise aus einem Kantrohr geformtes Griffelement (8') vorgesehen ist, der über eine wärmeisolierende Manschette (18) am Behälter (5) befestigt ist.

## Claims

1. An elastic ring element (1) for a lid (4) for releasably closing a container (5), in particular for closing a pot, wherein the ring element (1) encloses a lid bottom (6) of the lid (4) on the circumferential side and extends at least slightly in axial direction with an axial section (3), wherein the ring element (1), at least in a defined circumferential section (12, 13, 14) of its axial section (3), encompasses at least one passage opening (9), which can be brought to be congruent with a spout (10) of the container (5) for pouring out liquid, which is located in the container (5),
**characterized in**
- **that** the ring element (1) encompasses pouring sections (11, 12, 13, 14), offset in circumferential direction, in particular in each case offset by 90°, and in each case adapted to the size of the spout (10), namely a closed pouring section (11), a pouring section (12) comprising small passage openings (9), a pouring section (13) comprising large passage openings (9) and a completely open pouring section (14), so that four different pouring cross sections result,
- **that** provision is made for a holding ring (15), in particular made of metal, which encloses the ring element (1),
- **that** the holding ring (15) encompasses symbols (16), which are visible and which display the pouring sections (11, 12, 13, 14) in the ring element (1), wherein the holding ring (15) is preferably positioned relative to the ring element (1) such that the symbols (16) of the holding ring (15) are axially aligned with the corresponding pouring sections (11, 12, 13, 14) in the ring element (1),
- **that** the holding ring (15), the ring element (1) and the lid bottom (6) are embodied so as to be capable of being separated from one another.

2. The ring element according to claim 1,
**characterized in**
**that** the ring element (1) is embodied of polymer, in particular of silicon.

3. A lid (4) for releasably closing a container (5), in particular for closing a pot, wherein the container (5) encompasses a spout (10), which is pushed outwardly, for pouring out liquid, which is located in the container (5), **characterized in that** the lid (4) is provided with an elastic ring element (1) according to claim 1 or 2.

4. The lid according to claim 3,
**characterized in**
**that** the lid bottom (6), which is enclosed by the ring element (1), is embodied of glass and/or of steel.

5. The lid according to claim 3 or 4,
**characterized in**
**that** a handle element (8) is arranged on, in particular screwed, to the lid bottom (6).

6. The lid according to one of claims 3 to 5,
**characterized in**
**that** the holding ring (15) encompasses an L-shaped cross sectional profile and rests against an outer side as well as against an upper side of the ring element (1).

7. A container comprising a lid (4) according to one of claims 3 to 6.

8. The container according to claim 7,
**characterized in**
**that** provision is made for at least one lateral handle element (8'), which is preferably molded of a rectangular tube, which is fastened to the container (5) via a heat-insulating sleeve (18).

## Revendications

1. Elément annulaire (1) élastique pour un couvercle (4) destiné à la fermeture amovible d'un contenant (5), notamment à la fermeture d'une cocotte, l'élément amovible (1) enserrant côté périphérie un fond de couvercle (6) du couvercle (4) et s'étendant avec une partie axiale (3) au moins légèrement en direction axiale, dans au moins une partie périphérique (12, 13, 14) limitée de sa partie axiale (3), l'élément annulaire (1) comportant au moins une ouverture de passage (9), qui pour verser un liquide se trouvant dans le contenant (5) peut être amenée en coïncidence avec un bec verseur (10) du contenant (5), **caractérisé**
- **en ce que** l'élément annulaire (1) comporte des parties verseuses (11, 12, 13, 14), déportées en direction périphérique, notamment déportées chacune de 90° et adaptées chacune à la dimension du bec verseur (10), à savoir une partie verseuse (11) fermée, une partie verseuse (12) avec de petites ouvertures de passage (9), une partie verseuse (13) avec de grandes ouvertures de passage (9) et une partie verseuse (14) entièrement ouverte, de sorte à obtenir quatre différentes sections transversales pour verser,
- **en ce qu'**il est prévu une bague de maintien (15), notamment métallique, enserrant l'élément annulaire (1),
- **en ce que** la bague de maintien (15) comporte des symboles (16) visibles et reproduisant les parties verseuses (11, 12, 13, 14) dans l'élément annulaire (1), la bague de maintien (15) étant positionnée par rapport à l'élément annulaire (1) de préférence de telle sorte que les symboles (16) de la bague de maintien (15) soient en alignement axial avec les parties verseuses (11, 12, 13, 14) associées,
- **en ce que** la bague de maintien (15), l'élément annulaire (1) et le fond de couvercle (6) sont conçus en étant séparable les uns des autres.

2. Elément annulaire selon la revendication 1, **caractérisé en ce que** l'élément annulaire (1) est conçu en un polymère, notamment en silicone.

3. Couvercle (4) destiné à la fermeture amovible d'un contenant (5), notamment à la fermeture d'une cocotte, le contenant (5) comportant un bec verseur (10) poussé vers l'extérieur, pour verser un liquide se trouvant dans le contenant (5), **caractérisé en ce que** le couvercle (4) est muni d'un élément annulaire (1) élastique selon la revendication 1 ou la revendication 2.

4. Couvercle selon la revendication 3, **caractérisé en ce que** le fond de couvercle (6) enserré par l'élément annulaire (1) est conçu en verre et/ou en acier.

5. Couvercle selon la revendication 3 ou la revendication 4, **caractérisé en ce que** sur le fond de couvercle (6) est disposé, notamment vissé un élément de préhension (8).

6. Couvercle selon l'une quelconque des revendications 3 à 5, **caractérisé en ce que** la bague de maintien (15) comporte une section transversale à profil en forme de L et s'appuie sur une face extérieure, ainsi que sur une face supérieure de l'élément annulaire (1).

7. Contenant avec un couvercle (4) selon l'une quelconque des revendications 3 à 6.

8. Contenant selon la revendication 7, **caractérisé en ce qu'**il est prévu au moins un élément de préhension (8') latéral, façonné de préférence dans un tube carré, qui par l'intermédiaire d'une manchette (18) thermo-isolée est fixé sur le contenant (5).
